# EUROPEAN PATENT APPLICATION

(11) **EP 4 312 093 A1**
(43) Date of publication of application: **31.01.2024**
(21) Application number: 23187785.3
(22) Date of filing: 26.07.2023
(51) Int. Cl.: G05B 17/02, G06F 9/50, G05B 19/042

(54) **INFORMATION MANAGEMENT APPARATUS, CALCULATION APPARATUS, INFORMATION MANAGEMENT PROGRAM, CALCULATION PROGRAM, INFORMATION PROCESSING SYSTEM, AND INFORMATION PROCESSING METHOD**

(30) Priority: 29.07.2022 JP 2022121939
(71) Applicant: Yokogawa Electric Corporation, Tokyo 180-8750 (JP)
(72) Inventor: URABE, Hiroo, Musashino-shi, Tokyo, 180-8750 (JP); YOSHIDA, Yusaku, Musashino-shi, Tokyo, 180-8750 (JP)
(74) Representative: Winter, Brandl - Partnerschaft mbB

(57) **Abstract**

A web application server (10) receives measurement data that is collected by a device (30), setting a first virtual device corresponding to the measurement data, and sets, when a calculation apparatus (20) that performs a predetermined calculation receives the measurement data and when acquiring first calculated data generated from the measurement data, a second virtual device corresponding to the first calculated data.

## Description

### FIELD

The present invention relates to an information management apparatus, a calculation apparatus, a computer-readable recording medium, an information processing system, and an information processing method.

### BACKGROUND

Conventionally, a technology using a cloud environment for collecting data from apparatuses (devices), such as a gateway apparatus, a sensor apparatus, and a control apparatus, that are installed in a plant or the like is known.

Patent Literature 1: Japanese Laid-open Patent Publication No. 2016-091434

However, in the conventional technology, it is difficult to efficiently enhance functions of the cloud environment. For example, in the conventional technology, there is a need to set a port dedicated for software when a web application server on the cloud environment transmits data to an external Artificial Intelligence (AI) application server.

The present invention has been conceived in view of the foregoing situations, and an object of the present invention is to efficiently manage a calculated value that is obtained from a measurement value that is collected by a device.

### SUMMARY

According to an aspect of the embodiments, an information management apparatus includes, a reception unit that receives measurement data that is collected by a device, a first setting unit that sets a first virtual device corresponding to the measurement data, and a second setting unit that, when a calculation apparatus that performs a predetermined calculation receives the measurement data and when acquiring first calculated data that is generated from the measurement data, sets a second virtual device corresponding to the first calculated data.

According to an aspect of the embodiments, a calculation apparatus includes, a reception unit that receives, from an information management apparatus, measurement data that is associated with a first virtual device set by the information management apparatus and that is collected by a device, a calculation unit that generates first calculated data by performing a predetermined calculation on the measurement data, and a transmission unit that transmits the first calculated data as data that is associated with a second virtual device set by the information management apparatus to the information management apparatus.

According to an aspect of the embodiments, an information management program that causes a computer to execute a process, the process includes, receiving measurement data that is collected by a device, setting a first virtual device corresponding to the measurement data, and setting, when a calculation apparatus that performs a predetermined calculation receives the measurement data and when acquiring first calculated data that is generated from the measurement data, a second virtual device corresponding to the first calculated data.

According to an aspect of the embodiments, a calculation program that causes a computer to execute a process, the process includes, receiving, from an information management apparatus, measurement data that is associated with a first virtual device set by the information management apparatus and that is collected by a device, generating first calculated data by performing a predetermined calculation on the measurement data, and transmitting the first calculated data as data that is associated with a second virtual device set by the information management apparatus to the information management apparatus.

According to an aspect of the embodiments, an information processing system includes, an information management apparatus, and a calculation apparatus, wherein the information management apparatus includes a reception unit that receives measurement data that is collected by a device, a first setting unit that sets a first virtual device corresponding to the measurement data, and a second setting unit that sets a second virtual device corresponding to first calculated data that is generated from the measurement data by the calculation apparatus, and the calculation apparatus includes a reception unit that receives, from the information management apparatus, the measurement data that is associated with the first virtual device, a calculation unit that generates the first calculated data by performing a predetermined calculation on the measurement data, and a transmission unit that transmits the first calculated data as data that is associated with the second virtual device to the information management apparatus.

According to an aspect of the embodiments, an information processing method implemented by an information management apparatus and a calculation apparatus, the information processing method includes, receiving, by the information management apparatus, measurement data that is collected by a device, setting, by the information management apparatus, a first virtual device corresponding to the measurement data, setting, by the information management apparatus, a second virtual device corresponding to first calculated data that is generated from the measurement data by the calculation apparatus, receiving, by the calculation apparatus, the measurement data that is associated with the first virtual device from the information management apparatus, generating, by the calculation apparatus, the first calculated data by performing a predetermined calculation on the measurement data; and transmitting, by the calculation apparatus, the first calculated data as data that is associated with the second virtual device to the information management apparatus.

### BRIEF DESCRIPTION OF THE DRAWINGS

FIG. 1 is a diagram illustrating a configuration example of an information processing system according to one embodiment;
FIG. 2 is a block diagram illustrating a configuration example of each of apparatuses according to one embodiment;
FIG. 3 is a diagram illustrating an example of a measurement data storage unit of a web application server according to one embodiment;
FIG. 4 is a diagram illustrating an example of a calculated data storage unit of the web application server according to one embodiment;
FIG. 5 is a diagram illustrating an example of a display screen according to one embodiment;
FIG. 6 is a diagram illustrating an example of an AI function data storage unit of an AI application server according to one embodiment;
FIG. 7 is a sequence diagram illustrating an example of the flow of information processing according to one embodiment; and
FIG. 8 is a diagram for explaining a hardware configuration example.

### DESCRIPTION OF EMBODIMENTS

Embodiments of information management apparatus, a calculation apparatus, an information management program, a calculation program, an information processing system, and an information processing method according to the present invention will be described in detail below with reference to the drawings. The present invention is not limited by the embodiments described below.

### Embodiment

A configuration of an information processing system 100 according to one embodiment, a configuration of each of apparatuses, and the flow of processing will be described in sequence, and thereafter, effects of the embodiment will be described.

### 1. Configuration of information processing system 100

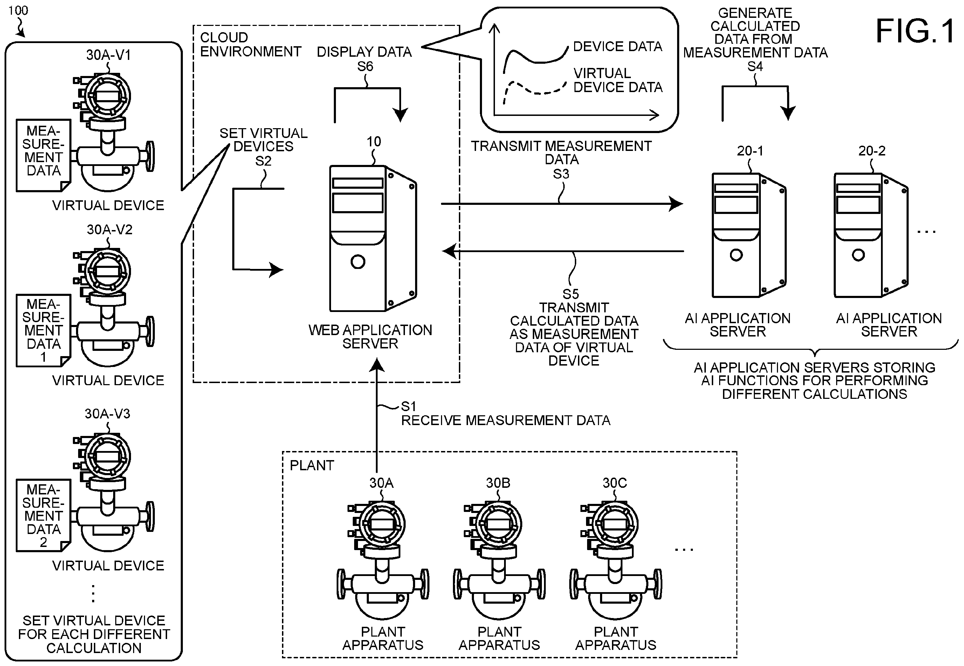

The configuration of the information processing system 100 according to one embodiment will be described in detail below with reference to FIG. 1. FIG. 1 is a diagram illustrating a configuration example of the information processing system 100 according to one embodiment. A configuration example of the entire information processing system 100, processing performed by the information processing system 100, and problems with an information processing system of a reference technology will be described in sequence, and thereafter effects of the information processing system 100 will be described. Meanwhile, in the embodiment, an example will be described in which a factory production remote monitoring using a plant apparatus that is a device installed in a plant is described as one example, but the device and the field of use are not specifically limited, and the technology is applicable to environmental measurement remote monitoring, such as a power monitor, a wind power generator, a water supply and sewage monitor, or river monitoring.

### 1-1. Configuration example of entire information processing system 100

The information processing system 100 includes a web application server 10 that is an information management apparatus, AI application servers 20 (20-1, 20-2, ...) that are calculation apparatuses, and plant apparatuses 30 (30A, 30B, 30C, ...). Here, the web application server 10 is constructed in a cloud environment. Further, the plant apparatuses 30 are installed in a plant. Meanwhile, the information processing system 100 illustrated in FIG. 1 may include the plurality of web application servers 10.

### 1-2. Processing of entire information processing system 100

Processing of the entire information processing system 100 as described above will be described. Meanwhile, Steps S1 to S6 may be performed in a different order. Further, a part of processes at Step S1 to S6 may be omitted.

### 1-2-1. Measurement data reception process

The web application server 10 receives measurement data from the plant apparatuses 30 (Step S1). For example, the web application server 10 receives, as JavaScript (registered trademark) Object Notation (JSON) data that is text data, a sensor value or the like that is collected by the plant apparatus 30A that is a sensor apparatus.

### 1-2-2. Virtual device setting process

The web application server 10 sets virtual devices 30-V corresponding to the plant apparatuses 30 (Step S2). For example, the web application server 10 sets a virtual device 30A-V1 corresponding to measurement data that is transmitted by the plant apparatus 30A. Further, when the web application server 10 performs a calculation using an AI function or the like on the measurement data, the web application server 10 sets a virtual device 30A-V corresponding to the calculated data. For example, the web application server 10 sets the virtual devices 30-V corresponding to different kinds of calculated data, such as a virtual device 30A-V2 corresponding to an AI function 1 that is calculated by the AI application server 20-1 and a virtual device 30A-V3 corresponding to an AI function 2 that is calculated by the AI application server 20-2.

### 1-2-3. Measurement data transmission process

The web application server 10 transmits the measurement data to the AI application servers 20 by using an external linkage common Application Programming Interface (API) (Step S3). For example, the web application server 10 transmits measurement data A collected by the plant apparatus 30A, as Comma-Separated Values (CSV) data that is text data, to the AI application server 20-1 that performs a calculation by using the AI function 1, via the virtual device 30A-V1. In this case, the web application server 10 is able to further transmit the measurement data A collected by the plant apparatus 30A to the AI application server 20-2 that performs a calculation by using the AI function 2.

### 1-2-4. Calculated data generation process

The AI application server 20 generates calculated data from the measurement data (Step S4). For example, the AI application server 20-1 generates calculated data A-1 by inputting the measurement data A collected by the plant apparatus 30A to the AI function 1. At this time, the AI application server 20-2 is also able to generate calculated data A-2 by inputting the measurement data A collected by the plant apparatus 30A to the AI function 2.

### 1-2-5. Calculated data transmission process

The AI application servers 20 transmits the calculated data, as the measurement data of the virtual devices 30-V, to the web application server 10 via the external linkage common API (Step S5). For example, by transmitting the calculated data A-1 as JSON data via a virtual device 30-V2, the AI application server 20-1 is able to transmit the calculated data A-1 as the measurement data of the virtual device 30-V2 to the web application server 10. At this time, by transmitting the calculated data A-2 as JSON data via a virtual device 30-V3, the AI application server 20-2 is able to transmit the calculated data A-2 as the measurement data of the virtual device 30-V3 to the web application server 10.

### 1-2-6. Data display process

The web application server 10 displays the measurement data that is device data and the calculated data that is virtual device data (Step S6). For example, the web application server 10 displays the virtual device 30A-V1 that corresponds to the measurement data A received from the plant apparatus 30A and the virtual device 30A-V2 that corresponds to the calculated data A-1 received from the AI application server 20-1 on a terminal device (not illustrated) of an administrator of the information processing system 100. At this time, the web application server 10 is also able to display the virtual device 30A-V3 that corresponds to the calculated data A-2 received from the AI application server 20-2 on the terminal device (not illustrated) of the administrator of the information processing system 100. Furthermore, the administrator of the information processing system 100 is able to view various kinds of data from the virtual device 30-V as described above. For example, the administrator of the information processing system 100 is able to view a graph that represents a temporal change of the calculated data A-1 by performing click operation about display of the virtual device 30A-V2.

### 1-3. Information processing system of reference technology

An overview of information processing as the reference technology will be described first, and thereafter, a problem with the reference technology will be described.

### 1-3-1. Overview of information processing of reference technology

An information processing system of the reference technology performs information processing as described below. Firstly, the web application server receives measurement data that is transmitted from a connected plant apparatus. Secondly, the web application server performs a data selection process and a transmission process for each of functions in response to a request from an external linkage calculation function, that is, an AI application server. Thirdly, the AI application server that is the external linkage function performs a software calculation process. Fourthly, the AI application server transmits calculated data to the web application server. Fifthly, the web application server associates the calculated data received from the AI application server, and displays the calculated data as data of the plant apparatus.

### 1-3-2. Problem with information processing of reference technology

The information processing of the reference technology as described above has a problem as described below. Firstly, when functions of the cloud environment are to be enhanced by external linkage, there is a need to generate a port dedicated for software, so that a cost for generating a dedicated function increases. Secondly, with an increase in functions, there is a need to add dedicated functions, such as a function 1 and a function 2. Thirdly, there is a need to perform association operation for selecting a device to which data is transmitted when the data is to be transmitted to a linked function, in close cooperation with the web application server and the external linkage function.

### 1-4. Effects of information processing system 100

An overview of the information processing system 100 according to one embodiment will be firstly described below and thereafter effects of the information processing system 100 will be described.

### 1-4-1. Overview of information processing system 100

In the information processing system 100, the web application server 10 receives the measurement data that is collected by the plant apparatus 30, sets a virtual device 30-V1 corresponding to the plant apparatus 30, transmits the measurement data to the AI application server 20 that performs a predetermined calculation, and acquires calculated data that the AI application server 20 has generated from the measurement data via the virtual device 30-V2.

Further, when acquiring each piece of calculated data generated by different kinds of calculations from the measurement data, the web application server 10 sets the plurality of virtual devices 30-V corresponding to the respective pieces of calculated data, transmits the measurement data to the AI application server 20 by using a common API that performs transmission and reception of data to and from external apparatuses, and acquires a plurality of pieces of calculated data via the corresponding virtual devices by using the common API. Furthermore, the web application server 10 stores the measurement data and the calculated data, and displays at least one of the stored measurement data and the stored calculated data as a predetermined graph.

In other words, the information processing system 100 is able to manage, as a measurement value of a different device, the calculated value that is obtained by software processing, such as external linkage, from a physical quantity that is measured by a device. At this time, in the information processing system 100, function enhancement by external linkage need not be performed for each of functions, so that it is possible to reduce a development cost of the web application server 10.

### 1-4-2. Effects of information processing system 100

In the information processing system 100, effects as described below are achieved. Firstly, there is no need to set a dedicated port for external linkage at the time of function enhancement, so that it is possible to reduce the number of ports of the cloud environment and reduce the development cost. Secondly, by fixedly using the common API as a port, it is possible to use the port for Internet of Things (IoT) hardware. Thirdly, the web application server 10 does not need information on a linked function. In other words, the web application server 10 needs only device information (hardware information or the like) when receiving data as a virtual device, so that it is possible to reduce time and effort for linkage. Fourthly, it is possible to generate a virtual device corresponding to a plurality of kinds of software processing from a single device. Fifthly, if storage and display are performed while associating the measurement value and the calculated value of the device, in some cases, re-calculations may be needed when a calculation means or a display means is changed; however, by separately handling the measurement value and the calculated value while adopting the calculated value as the measurement value of the virtual device, it becomes possible to easily perform re-calculations and re-construction. As described above, the information processing system 100 is able to efficiently enhance functions of the cloud environment.

### 2. Configuration of each of apparatuses in information processing system 100

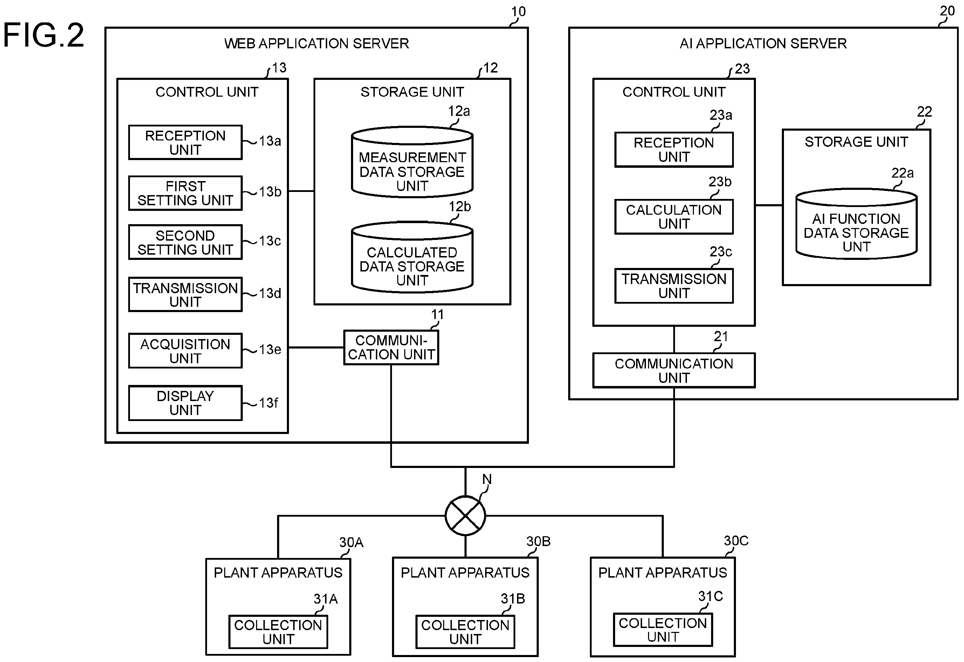

A functional configuration of each of the apparatuses included in the information processing system 100 illustrated in FIG. 1 will be described below with reference to FIG. 2. FIG. 2 is a block diagram illustrating a configuration example of each of the apparatuses according to one embodiment. In the following, a configuration example of the entire information processing system 100 according to one embodiment will be first described, and thereafter, configuration examples of the web application server 10, the AI application server 20, and the plant apparatuses 30 according to one embodiment will be described in detail.

### 2-1. Configuration example of entire information processing system 100

As illustrated in FIG. 2, the information processing system 100 includes the web application server 10, the AI application server 20, and the plant apparatuses 30. The web application server 10 and the AI application server 20 are communicably connected to each other by a predetermined communication network. Further, the plant apparatuses 30 have communication functions that enable communication by a communication network N, such as a mobile phone network.

Meanwhile, the web application server 10 is not limited to a server apparatus that is constructed in the cloud environment, but may be a physical server, a virtual machine, a container, or the like.

### 2-2. Configuration example of web application server 10

A configuration example of the web application server 10 that is an information management apparatus will be described below with reference to FIG. 2. The web application server 10 includes a communication unit 11, a storage unit 12, and a control unit 13. Meanwhile, the web application server 10 may include an input unit (for example, a keyboard, a mouse, or the like) that receives various kinds of information from an administrator of the information processing system 100 and an output unit (for example, a liquid crystal display or the like) for displaying various kinds of information.

### 2-2-1. Communication unit 11

The communication unit 11 controls data communication with a different apparatus. For example, the communication unit 11 performs data communication with each of communication apparatuses via a router or the like. Further, the communication unit 11 is able to perform data communication with a terminal of an operator (not illustrated).

### 2-2-2. Storage unit 12

The storage unit 12 stores therein various kinds of information that are referred to when the control unit 13 operates and various kinds of information that are acquired when the control unit 13 operates. The storage unit 12 includes a measurement data storage unit 12a and a calculated data storage unit 12b. Here, the storage unit 12 may be implemented by, for example, a semiconductor memory device, such as a random access memory (RAM) or a flash memory, or a storage device, such as a hard disk or an optical disk. Meanwhile, in the example illustrated in FIG. 2, the storage unit 12 is installed inside the web application server 10, but may be installed outside the web application server 10 or a plurality of storage units may be installed.

### 2-2-2-1. Measurement data storage unit 12a

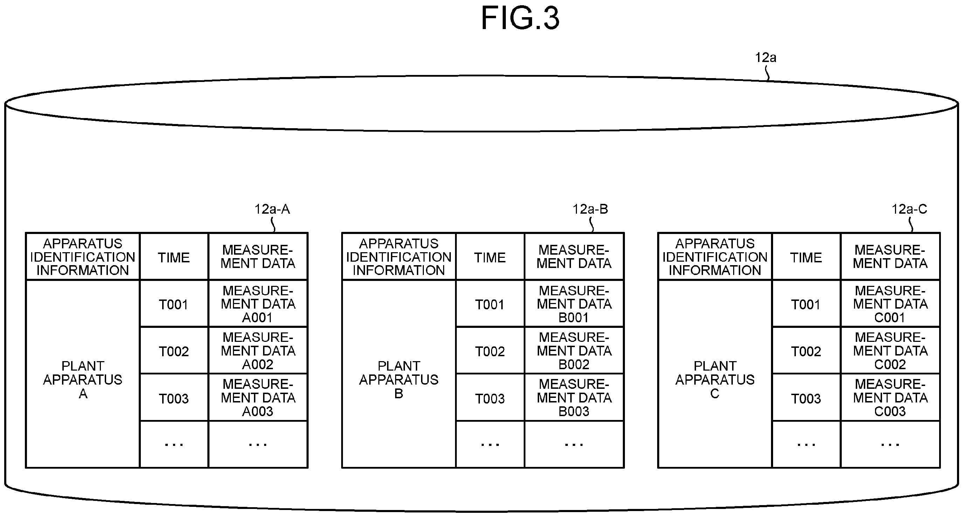

The measurement data storage unit 12a stores therein the measurement data that is transmitted from the plant apparatuses 30. One example of information that is stored in the measurement data storage unit 12a will be described below with reference to FIG. 3. FIG. 3 is a diagram illustrating an example of the measurement data storage unit 12a of the web application server 10 according to one embodiment. In the example illustrated in FIG. 3, the measurement data storage unit 12a includes items, such as "apparatus identification information", "time", and "measurement data", for each of the plant apparatuses 30.

The "apparatus identification information" indicates identification information for identifying the plant apparatus 30, and is, for example, an identification number of the plant apparatus 30. The "time" indicates a time at which the plant apparatus 30 acquires data, and is represented by, for example, date-month-year and second-minute-hour. The "measurement data" indicates intensity of the data that is acquired by the plant apparatus 30, and is, for example, fluid pressure, flow velocity, temperature, or the like.

Specifically, FIG. 3 illustrates an example as follows: with respect to measurement data 12a-A of the plant apparatus 30A that is identified by the apparatus identification information of "plant apparatus A", measurement data at a time "T001" is "measurement data A001", measurement data at a time "T002" is "measurement data A002", measurement data at a time "T003" is "measurement data A003", etc.; with respect to measurement data 12a-B of the plant apparatus 30B that is identified by the apparatus identification information of "plant apparatus B", measurement data at the time "T001" is "measurement data B001", measurement data at the time "T002" is "measurement data B002", measurement data at the time "T003" is "measurement data B003", etc.; and with respect to measurement data 12a-C of the plant apparatus 30C that is identified by the apparatus identification information of "plant apparatus C", measurement data at the time "T001" is "measurement data C001", measurement data at the time "T002" is "measurement data C002", measurement data at the time "T003" is "measurement data C003", etc.

Meanwhile, the measurement data storage unit 12a may be set in a storage area dedicated for a virtual device that is constructed by a first setting unit 13b of the control unit 13 to be described later.

### 2-2-2-2. Calculated data storage unit 12b

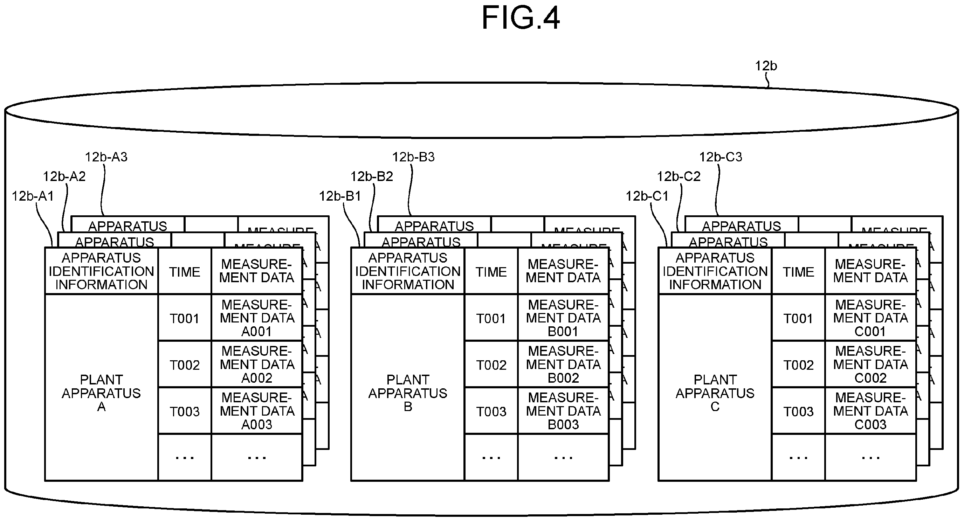

The calculated data storage unit 12b stores therein the calculated data that is transmitted from the AI application server 20. One example of information that is stored in the calculated data storage unit 12b will be described below with reference to FIG. 4. FIG. 4 is a diagram illustrating an example of the calculated data storage unit 12b of the web application server 10 according to one embodiment. In the example illustrated in FIG. 4, the calculated data storage unit 12b includes items, such as "apparatus identification information", "time", and "calculated data", for each of the plant apparatuses 30.

The "apparatus identification information" indicates identification information for identifying the plant apparatus 30, and is, for example, the identification number of the plant apparatus 30. The "time" indicates a time at which the plant apparatus 30 acquires data, and is represented by, for example, date-month-year and second-minute-hour. The "calculated data" indicates intensity of a score that is calculated from the data that is acquired by the plant apparatus 30, and is, for example, a score value that indicates a degree of risk of a process of a plant, or the like.

Specifically, FIG. 4 illustrates an example as follows: with respect to calculated data 12b-A1 of the plant apparatus 30A that is identified by the apparatus identification information of "plant apparatus A", calculated data at the time "T001" is "calculated data A001", calculated data at the time "T002" is "calculated data A002", calculated data at the time "T003" is "calculated data A003", etc.; with respect to calculated data 12b-B1 of the plant apparatuses 30B that is identified by the apparatus identification information of "plant apparatus B", calculated data at the time "T001" is "calculated data B001", calculated data at the time "T002" is "calculated data B002", calculated data at the time "T003" is "calculated data B003", etc.; and with respect to calculated data 12a-C1 of the plant apparatuses 30C that is identified by the apparatus identification information of "plant apparatus C", calculated data at the time "T001" is "calculated data C001", calculated data at the time "T002" is "calculated data C002", calculated data at the time "T003" is "calculated data C003", etc.

Here, the pieces of calculated data 12b-A1, 12b-A2, 12b-A3, etc. are pieces of data that are subjected to different calculation processes from the measurement data 12a-A that is collected by the plant apparatus 30A. For example, the calculated data 12b-A1 is data that is subjected to a calculation process by the AI function 1, the calculated data 12b-A2 is data that is subjected to a calculation process by the AI function 2, and the calculated data 12b-A3 is data that is subjected to a calculation process by the AI function. Further, similarly, the pieces of calculated data 12b-B1, 12b-B2, 12b-B3, etc. are pieces of data that are subjected to different calculation processes from the measurement data 12a-B that is collected by the plant apparatus 30B, and the pieces of calculated data 12b-C1, 12b-C2, 12b-C3, etc. are pieces of data that are subjected to different calculation processes from the measurement data 12a-C that is collected by the plant apparatuses 30C.

Meanwhile, the calculated data storage unit 12b may be set in a storage area dedicated for a virtual device that is constructed by a second setting unit 13c of the control unit 13 to be described later.

### 2-2-3. Control unit 13

The control unit 13 controls the entire web application server 10. The control unit 13 includes a reception unit 13a, the first setting unit 13b, the second setting unit 13c, a transmission unit 13d, an acquisition unit 13e, and a display unit 13f. Here, the control unit 13 may be implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-3-1. Reception unit 13a

The reception unit 13a receives measurement data that is collected by a device. For example, the reception unit 13a receives measurement data in the JSON format from the plant apparatuses 30, such as a sensor apparatus, a gateway apparatus, and a control apparatus, that are installed in a plant. Meanwhile, the reception unit 13a stores the received measurement data in the measurement data storage unit 12a.

A specific example will be described below. The reception unit 13a receives the measurement data 12a-A {time T001: the measurement data A001, time T002: the measurement data A002, time T003: the measurement data A003, etc.} collected by the plant apparatus 30A, the measurement data 12a-B {time T001: the measurement data B001, time T002: the measurement data B002, time T003: the measurement data B003, etc.} collected by the plant apparatus 30B, the measurement data 12a-C {time T001: the measurement data C001, time T002: the measurement data C002, time T003: the measurement data C003, etc.} collected by the plant apparatus 30C, and the like.

### 2-2-3-2. First setting unit 13b

The first setting unit 13b sets a first virtual device corresponding to the measurement data. At this time, the first setting unit 13b generates the first virtual device on a cloud system by using a resource that is included in the cloud system.

A specific example will be described below. The first setting unit 13b constructs, on the cloud environment, the virtual device 30A-V1 that corresponds to the measurement data 12a-A collected by the plant apparatus 30A, a virtual device 30B-V1 that corresponds to the measurement data 12a-B collected by the plant apparatuses 30B, a virtual device 30C-V1 that corresponds to the measurement data 12a-C collected by the plant apparatus 30C, and the like.

### 2-2-3-3. Second setting unit 13c

The second setting unit 13c, when a calculation apparatus that performs a predetermined calculation receives the measurement data and when acquiring first calculated data that is generated from the measurement data, sets a second virtual device corresponding to the first calculated data. At this time, the second setting unit 13c generates the second virtual device on the cloud system by using a resource that is included in the cloud system.

A specific example will be described below. The second setting unit 13c, when transmitting the measurement data 12a-A collected by the plant apparatus 30A to the AI application server 20-1 and acquiring the calculated data 12b-A1 that is generated by using the AI function 1 included in the AI application server 20-1, constructs the virtual device 30A-V2 that corresponds to the calculated data 12b-A1. At this time, the second setting unit 13c may construct the virtual device 30A-V2 before receiving the measurement data 12a-A from the plant apparatus 30A, or may construct the virtual device 30A-V2 before transmitting the measurement data 12a-A to the AI application server 20-1.

Further, when acquiring second calculated data that is generated from the measurement data by the calculation apparatus, the second setting unit 13c sets a third virtual device that corresponds to the second calculated data. Furthermore, when acquiring third calculated data that is generated from the measurement data by the calculation apparatus, the second setting unit 13c sets a fourth virtual device that corresponds to the third calculated data.

A specific example will be described below. The second setting unit 13c, when acquiring the calculated data 12b-A2 that is generated by using the AI function 2 included in the AI application server 20-2 from the measurement data 12a-A collected by the plant apparatus 30A, constructs the virtual device 30A-V3 that corresponds to the calculated data 12b-A2. Similarly, when acquiring the calculated data 12b-A3 that is generated by using an AI function 3 included in an AI application server 20-3 from the measurement data 12a-A collected by the plant apparatus 30A, the second setting unit 13c constructs a virtual device 30A-V4 that corresponds to the calculated data 12b-A3. Specifically, the second setting unit 13c generates the corresponding virtual device 30-V for each of the plant apparatuses 30 every time the calculation process is performed. Meanwhile, the second setting unit 13c is also able to generate a virtual device corresponding to calculated data that is generated by further performing a calculation process on the calculated data, instead of the calculated data generated from the measurement data.

### 2-2-3-4. Transmission unit 13d

The transmission unit 13d transmits the measurement data that is associated with the first virtual device to the calculation apparatus by using a common API that is shared between the information management apparatus and the calculation apparatus. For example, the transmission unit 13d transmits the measurement data in the CSV format to the AI application server 20 by using a common API that enables data transmission and reception between the web application server 10 and the AI application server 20. At this time, the transmission unit 13d transmits the measurement data to the AI application server 20 via the virtual device 30-V corresponding to the measurement data.

A specific example will be described below. The transmission unit 13d transmits the measurement data 12a-A collected by the plant apparatus 30A to each of the AI application server 20-1, the AI application server 20-2, the AI application server 20-3, etc. via the virtual device 30A-V1 by using the common API.

### 2-2-3-5. Acquisition unit 13e

The acquisition unit 13e acquires the calculated data calculated by the calculation apparatus, by using a common API. For example, the acquisition unit 13e acquires the calculated data in the JSON format from the AI application server 20 by using a common API that enables data transmission and reception between the web application server 10 and the AI application server 20. At this time, the acquisition unit 13e acquires the calculated data from the AI application server 20 via the virtual device 30-V corresponding to the calculated data. Meanwhile, the acquisition unit 13e stores the acquired calculated data in the calculated data storage unit 12b.

A specific example will be described below. The acquisition unit 13e acquires the calculated data 12b-A1 from the AI application server 20-1 via the virtual device 30A-V2 by using the common API. Further, the acquisition unit 13e acquires the calculated data 12b-A2 from the AI application server 20-2 via the virtual device 30A-V3 by using the common API. Furthermore, the acquisition unit 13e acquires the calculated data 12b-A3 from the AI application server 20-3 via the virtual device 30A-V4 by using the common API.

At this time, the acquisition unit 13e is able to acquire the calculated data via the virtual device 30-V based on device information (hardware information, tag information, or network map information).

### 2-2-3-6. Display unit 13f

The display unit 13f displays the first virtual device corresponding to the measurement data and the second virtual device corresponding to the first calculated data. Further, the display unit 13f displays data associated with the virtual device that is selected from the first virtual device and the second virtual device that are displayed.

### Specific example of display screen

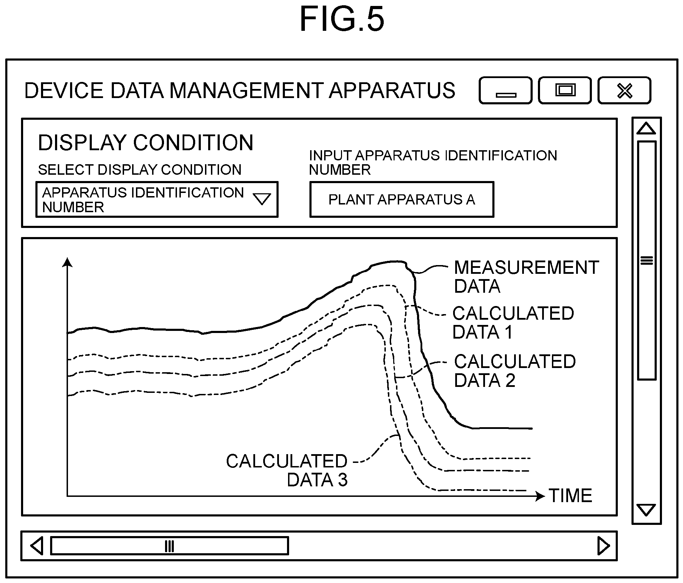

A specific example of a display screen that is output by the display unit 13f will be described below with reference to FIG. 5. FIG. 5 is a diagram illustrating a specific example of the display screen according to one embodiment. For example, the display unit 13f displays the virtual devices30-V that is set by the first setting unit 13b and the second setting unit 13c, and displays the measurement data and the calculated data in accordance with a selected display condition. As illustrated in FIG. 5, the display unit 13f is able to display a pull-down menu that allows selection of a display condition, a text box that allows input of the display condition, and the like.

In the example illustrated in FIG. 5, an "apparatus identification number" is selected as the "display condition" and the "plant apparatus A" is input as the apparatus identification number, so that the display unit 13f displays data in which temporal changes of the measurement data 12a-A ("measurement data" in FIG. 5), the calculated data 12b-A1 ("calculated data 1" in FIG. 5), the calculated data 12b-A2 ("calculated data 2" in FIG. 5), and the calculated data 12b-A3 ("calculated data 3" in FIG. 5) of the plant apparatus 30A are represented by graphs.

### 2-3. Configuration example of AI application server 20

A configuration example of the AI application server 20 that is an information management apparatus will be described below with reference to FIG. 2. The AI application server 20 includes a communication unit 21, a storage unit 22, and a control unit 23. Meanwhile, the AI application server 20 may include an input unit (for example, a keyboard, a mouse, or the like) that receives various kinds of information from the administrator of the information processing system 100, or an output unit (for example, a liquid crystal display or the like) for displaying various kinds of information.

### 2-3-1. Communication unit 21

The communication unit 21 controls data communication with a different apparatus. For example, the communication unit 21 performs data communication with each of communication apparatuses via a router or the like. Further, the communication unit 21 performs data communication with a terminal of an operator (not illustrated).

### 2-3-2. Storage unit 22

The storage unit 22 stores therein various kinds of information that are referred to when the control unit 23 operates and various kinds of information that are acquired when the control unit 23 operates. The storage unit 22 includes an AI function data storage unit 22a. Here, the storage unit 22 may be implemented by, for example, a semiconductor memory device, such as a RAM or a flash memory, or a storage apparatus, such as a hard disk or an optical disk. Meanwhile, in the example illustrated in FIG. 2, the storage unit 22 is installed inside the AI application server 20, but may be installed outside the AI application server 20 or a plurality of storage units may be installed.

### 2-3-2-1. AI function data storage unit 22a

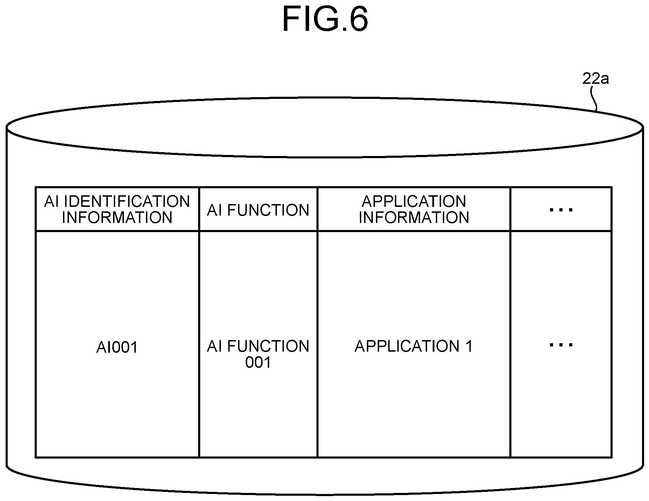

The AI function data storage unit 22a stores therein data related to an AI application that is executed by the AI application server 20. One example of information that is stored in the AI function data storage unit 22a will be described below with reference to FIG. 6. FIG. 6 is a diagram illustrating an example of the AI function data storage unit 22a of the AI application server 20 according to one embodiment. In the example illustrated in FIG. 6, the AI function data storage unit 22a includes items, such as "AI identification information", "AI function", and "application information".

The "AI identification information" indicates identification information for identifying the AI function, and is, for example, an identification number of the AI function. The "AI function" indicates a trained machine learning model, and is, for example, a machine learning model that outputs calculated data in response to input of measurement data. The "application information" indicates identification information for identifying an AI application that generates the calculated data from the measurement data, and is, for example, an identification number of the AI application.

Specifically, FIG. 6 illustrates an example in which an AI function of an "AI function 001" that is identified by AI identification information of "AI001" is executed by application information of an "application 1". Further, while FIG. 6 illustrates an example in which the AI application server 20 has a single AI function, the AI application server 20 may have a plurality of AI functions. In other words, the AI application server 20 is able to perform a calculation process by using an AI function that is selected from a plurality of AI functions.

### 2-3-3. Control unit 23

The control unit 23 controls the entire AI application server 20. The control unit 23 includes a reception unit 23a, a calculation unit 23b, and a transmission unit 23c. Here, the control unit 23 may be implemented by, for example, an electronic circuit, such as a CPU or an MPU, or an integrated circuit, such as an ASIC or an FPGA.

### 2-3-3-1. Reception unit 23a

The reception unit 23a receives the measurement data that is associated with the first virtual device set by the information management apparatus and that is collected by the device from the information management apparatus. For example, the reception unit 23a receives the measurement data from the web application server 10 by using a common API that enables data transmission and reception between the web application server 10 and the AI application server 20. At this time, the reception unit 23a receives the measurement data from the web application server 10 via the virtual device 30-V that is set by the web application server 10 and that corresponds to the measurement data.

A specific example will be described below. The reception unit 23a receives the measurement data 12a-A that is collected by the plant apparatus 30A, from the web application server 10 via the virtual device 30A-V1 by using the common API.

### 2-3-3-2. Calculation unit 23b

The calculation unit 23b generates the first calculated data by performing a predetermined calculation on the measurement data. For example, the calculation unit 23b inputs the measurement data to the AI function that is stored in the storage unit 22, and generates calculated data based on output data.

A specific example will be described below. The calculation unit 23b inputs the measurement data 12a-A collected by the plant apparatus 30A to the AI function 1, and adopts output data as the calculated data 12b-A1.

### 2-3-3-3. Transmission unit 23c

The transmission unit 23c transmits the first calculated data as data that is associated with the second virtual device set by the information management apparatus to the information management apparatus. For example, the transmission unit 23c transmits the calculated data to the web application server 10 by using a common API that enables data transmission and reception between the web application server 10 and the AI application server 20. At this time, the transmission unit 23c transmits the calculated data to the web application server 10 via the virtual device 30-V that corresponds to the calculated data.

A specific example will be described below. The transmission unit 23c transmits the calculated data 12b-A1 to the web application server 10 via the virtual device 30A-V2 by using the common API.

At this time, the transmission unit 23c is able to transmit the calculated data via the virtual device 30-V based on device information (hardware information, tag information, or network map information).

### 2-4. Configuration example of plant apparatuses 30

A configuration example of the plant apparatus 30 will be described below with reference to FIG. 2. For example, the plant apparatus 30 is configured by a sensor apparatus that is a measurement apparatus, a gateway apparatus that is a communication apparatus, a control apparatus that controls the plant apparatus, or the like. The plant apparatuses 30 (30A, 30B, 30C) include collection units 31 (31A, 31B, 31C).

### 2-4-1. Collection unit 31

The collection unit 31 collects data. For example, the collection unit 31 collects measurement data that is data of a plant. Further, the collection unit 31 transmits the data. For example, the collection unit 31 transmits the collected measurement data to the web application server 10.

### 3. Flow of process performed by information processing system 100

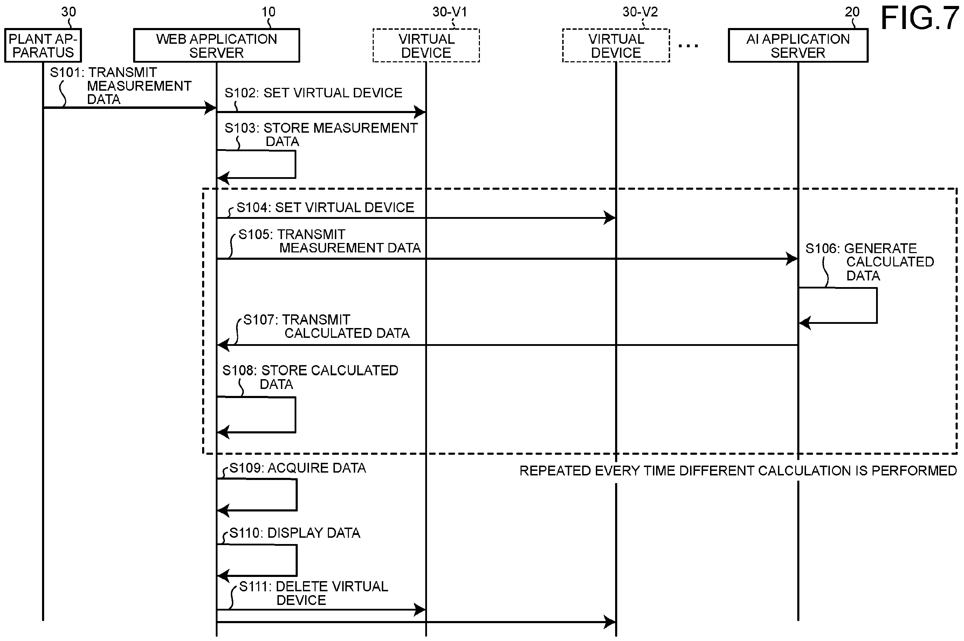

The flow of a process performed by the information processing system 100 according to one embodiment will be described below with reference to FIG. 7. FIG. 7 is a sequence diagram illustrating an example of the flow of information processing according to one embodiment. Meanwhile, processes at Steps S101 to S111 may be performed in a different order. Further, a part of the processes at Steps S101 to S111 below may be omitted.

### 3-1. Measurement data reception process

The plant apparatus 30 transmits the measurement data to the web application server 10 (Step S101). For example, the plant apparatus 30 transmits measurement data, such as a sensor value, that is collected by the plant to the web application server 10.

### 3-2. Virtual device setting process

The web application server 10 sets the virtual device 30-V1 corresponding to the measurement data (Step S102). For example, the virtual device 30-V1 corresponding to the measurement data of the plant apparatus 30 is generated on a resource of the cloud environment. At this time, the web application server 10 stores the measurement data in a storage area (Step S103).

Further, the web application server 10 sets the virtual device 30-V2 corresponding to the calculated data (Step S104). For example, the virtual device 30-V2 corresponding to the calculated data of the plant apparatuses 30 is generated on a resource of the cloud environment.

### 3-3. Measurement data transmission process

The web application server 10 transmits the measurement data to the AI application server 20 (Step S105). At this time, the virtual device 30-V1 transmits the measurement data to the AI application server 20 by using the external linkage common API.

### 3-4. Calculated data generation process

The AI application server 20 generates the calculated data from the measurement data (Step S106). For example, the AI application server 20 generates the calculated data 1 that is output by inputting the measurement data to the AI function 1.

### 3-5. Calculated data transmission process

The AI application server 20 transmits the calculated data to the web application server 10 (Step S107). At this time, the AI application server 20 transmits the calculated data to the web application server 10 by using the external linkage common API. Further, the web application server 10 stores the calculated data in a storage area (Step S108).

### 3-6. Data display process

The web application server 10 acquires the measurement data and the calculated data from the storage area (Step S109). Further, the web application server 10 displays the measurement data and the calculated data (Step S110). Furthermore, when the measurement data and the calculated data are not needed, the web application server 10 is able to delete the virtual device 30-V so as not to display the data (Step S111).

### 3-7. Others

When different kinds of calculated data are to be generated from the same measurement data by using different AI functions, the processes from Steps S104 to S108 are repeated every time a different calculation is performed. Specifically, the virtual device 30-V2, the virtual device 30-V3, a virtual device 30-V4, etc. that respectively correspond to the calculated data 1, the calculated data 2, the calculated data 3, etc. are generated.

### 4. Effects of embodiment

Effects of the embodiment will be described below. Effects 1 to 6 corresponding to processing according to one embodiment will be described below.

### 4-1. Effect 1

Firstly, in the processing according to one embodiment as described above, the web application server 10 receives the measurement data that is collected by the plant apparatus 30, sets the virtual device 30-V1 corresponding to the measurement data, and when the AI application server 20-1 that performs a predetermined calculation receives the measurement data and when acquiring the calculated data 1 that is generated from the measurement data, sets the virtual device 30-V2 corresponding to the calculated data 1. Therefore, in this processing, it is possible to efficiently manage a calculated value that is obtained from a measurement value that is collected by a device.

### 4-2. Effect 2

Secondly, in the processing according to one embodiment as described above, the web application server 10, when acquiring the calculated data 2 that is generated from the measurement data by the AI application server 20-2, sets the virtual device 30-V3 corresponding to the calculated data 2, and when acquiring the calculated data 3 that is generated from the measurement data by the AI application server 20-3, sets the virtual device 30-V4 corresponding to the calculated data 3. Therefore, in this processing, a virtual machine is constructed every time a calculated value is added, so that it is possible to efficiently manage the calculated value that is obtained from the measurement value collected by the device.

### 4-3. Effect 3

Thirdly, in the processing according to one embodiment as described above, the web application server 10 generates the virtual device 30-V1 on a cloud system by using a resource included in the cloud system, and generates the virtual device 30-V2 on the cloud system by using a resource included in the cloud system. Therefore, in this processing, by simplifying function enhancement in the cloud environment, it is possible to efficiently manage the calculated value that is obtained from the measurement value collected by the device.

### 4-4. Effect 4

Fourthly, in the processing according to one embodiment as described above, the web application server 10 transmits the measurement data that is associated with the virtual device 30-V1 to the AI application server 20 by using a common API that is shared between the web application server 10 and the AI application server 20, and acquires calculated data that is generated by the AI application server 20 by using the common API. Therefore, in this processing, there is no need to associate a device to be selected at the time of function enhancement, so that it is possible to efficiently manage the calculated value that is obtained from the measurement value collected by the device.

### 4-5. Effect 5

Fifthly, in the processing according to one embodiment as described above, the web application server 10 displays the virtual device 30-V1 corresponding to the measurement data and the virtual device 30-V2 corresponding to the calculated data 1, and displays data that is associated with the virtual device 30-V that is selected from the virtual device 30-V1 and the virtual device 30-V2 that are displayed. Therefore, in this processing, the administrator of the plant is able to monitor the needed data, so that it is possible to efficiently manage the calculated value that is obtained from the measurement value collected by the device.

### 4-6. Effect 6

Sixthly, in the processing according to one embodiment as described above, the AI application server 20 receives, from the web application server 10, the measurement data that is associated with the virtual device 30-V1 set by the web application server 10 and that is collected by the device, generates the calculated data 1 by performing a predetermined calculation on the measurement data, and transmits the calculated data 1 as data that is associated with the virtual device 30-V2 set by the web application server 10 to the web application server 10. Therefore, in this processing, there is no need to develop an interface dedicated for plant software processing, so that it is possible to efficiently manage the calculated value that is obtained from the measurement value collected by the device.

### System

Processing procedures, control procedures, specific names, and information including various kinds of data and parameters described in the specifications and the drawings as described above may be arbitrarily changed unless otherwise specified.

Further, the components of each of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Furthermore, for each processing function performed by each of the apparatuses, all or any part of the processing function may be implemented by a CPU and a program analyzed and executed by the CPU or may be implemented as hardware by wired logic.

### Hardware

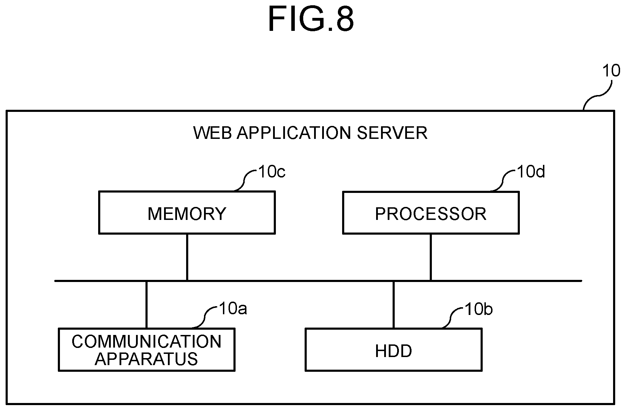

A hardware configuration example of the web application server 10 that is an information processing apparatus will be described below. Meanwhile, other apparatuses, such as the AI application server 20, may have the same hardware configuration. FIG. 8 is a diagram for explaining the hardware configuration example. As illustrated in FIG. 8, the web application server 10 includes a communication apparatus 10a, a hard disk drive (HDD) 10b, a memory 10c, and a processor 10d. Further, all of the units illustrated in FIG. 8 are connected to one another via a bus or the like.

The communication apparatus 10a is a network interface card or the like and performs communication with a different server. The HDD 10b stores therein a program that causes the functions illustrated in FIG. 2 to operate and a database.

The processor 10d reads a program that performs the same process as each of the processing units illustrated in FIG. 2 from the HDD 10b or the like, loads the program onto the memory 10c, and performs a process that executes each of the functions illustrated in FIG. 2 etc. For example, the process executes the same function as each of the processing units included in the web application server 10. Specifically, the processor 10d reads a program with the same functions as the reception unit 13a, the first setting unit 13b, the second setting unit 13c, the transmission unit 13d, the acquisition unit 13e, the display unit 13f, and the like from the HDD 10b or the like. Further, the processor 10d performs a process that executes the same processing as the reception unit 13a, the first setting unit 13b, the second setting unit 13c, the transmission unit 13d, the acquisition unit 13e, the display unit 13f, and the like.

In this manner, the web application server 10 operates as an apparatus that performs various kinds of processing methods by reading and executing a program. Further, the web application server 10 is able to implement the same functions as the embodiment as described above by causing a medium reading apparatus to read the above-described program from a recording medium and execute the read program. Meanwhile, the program described in the other embodiments need not always be executed by the web application server 10. For example, the present invention is similarly applicable to a case in which a different computer or a server performs a program and a case in which the different computer and the server execute the program in a cooperative manner.

The program may be distributed via a network, such as the Internet. Further, the program may be recorded in a computer readable recording medium, such as a hard disk, a flexible disk (FD), a compact disc-read only memory (CD-ROM), a magneto-optical disk (MO), or a digital versatile disc (DVD), and may be executed by being read from the recording medium by a computer.

### Others

Examples of combinations of the features of the disclosed technology are described below.
(1) An information management apparatus includes a reception unit that receives measurement data that is collected by a device, a first setting unit that sets a first virtual device corresponding to the measurement data, and a second setting unit that, when a calculation apparatus that performs a predetermined calculation receives the measurement data and when acquiring first calculated data that is generated from the measurement data, sets a second virtual device corresponding to the first calculated data.
(2) In the information management apparatus according to (1), the second setting unit, when acquiring second calculated data that is generated from the measurement data by the calculation apparatus, sets a third virtual device corresponding to the second calculated data, and when acquiring third calculated data that is generated from the measurement data by the calculation apparatus, sets a fourth virtual device corresponding to the third calculated data.
(3) In the information management apparatus according to (1) or (2), the first setting unit generates the first virtual device on a cloud system by using a resource included in the cloud system, and the second setting unit generates the second virtual device on the cloud system by using a resource included in the cloud system.
(4) The information management apparatus according to any one of (1) to (3) further includes a transmission unit that transmits the measurement data that is associated with the first virtual device to the calculation apparatus by using a common API that is shared between the information management apparatus and the calculation apparatus, and an acquisition unit that acquires calculated data generated by the calculation apparatus by using the common API.
(5) The information management apparatus according to any one of (1) to (4) further includes a display unit that displays the first virtual device corresponding to the measurement data and a second virtual device corresponding to the first calculated data, and displays data that is associated with a virtual device that is selected from the first virtual device and the second virtual device that are displayed.
(6) A calculation apparatus includes a reception unit that receives, from an information management apparatus, measurement data that is associated with a first virtual device set by the information management apparatus and that is collected by a device, a calculation unit that generates first calculated data by performing a predetermined calculation on the measurement data, and a transmission unit that transmits the first calculated data as data that is associated with a second virtual device set by the information management apparatus to the information management apparatus.
(7) An information management program that causes a computer to execute a process including receiving measurement data that is collected by a device, setting a first virtual device corresponding to the measurement data, setting, when a calculation apparatus that performs a predetermined calculation receives the measurement data and when acquiring first calculated data that is generated from the measurement data, a second virtual device corresponding to the first calculated data.
(8) A calculation program that causes a computer to execute a process including receiving, from an information management apparatus, measurement data that is associated with a first virtual device set by the information management apparatus and that is collected by a device, generating first calculated data by performing a predetermined calculation on the measurement data, and transmitting the first calculated data as data that is associated with a second virtual device set by the information management apparatus to the information management apparatus.
(9) An information processing system that includes an information management apparatus and a calculation apparatus, where the information management apparatus includes a reception unit that receives measurement data that is collected by a device, a first setting unit that sets a first virtual device corresponding to the measurement data, and a second setting unit that sets a second virtual device corresponding to first calculated data that is generated from the measurement data by the calculation apparatus, and the calculation apparatus includes a reception unit that receives, from the information management apparatus, the measurement data that is associated with the first virtual device, a calculation unit that generates the first calculated data by performing a predetermined calculation on the measurement data, and a transmission unit that transmits the first calculated data as data that is associated with the second virtual device to the information management apparatus.
(10) An information processing method implemented by an information management apparatus and a calculation apparatus, where the information management apparatus performs a process of receiving measurement data that is collected by a device, setting a first virtual device corresponding to the measurement data, and setting a second virtual device corresponding to first calculated data that is generated from the measurement data by the calculation apparatus, and the calculation apparatus performs a process of receiving the measurement data that is associated with the first virtual device from the information management apparatus, generating the first calculated data by performing a predetermined calculation on the measurement data, and transmitting the first calculated data as data that is associated with the second virtual device to the information management apparatus.

According to the present invention, it is possible to efficiently manage a calculated value that is obtained from a measurement value collected by a device.

## Claims

1. An information management apparatus (10) comprising:
a reception unit (13a) that receives measurement data that is collected by a device (30);
a first setting unit (13b) that sets a first virtual device corresponding to the measurement data; and
a second setting unit (13c) that, when a calculation apparatus (20) that performs a predetermined calculation receives the measurement data and when acquiring first calculated data that is generated from the measurement data, sets a second virtual device corresponding to the first calculated data.

2. The information management apparatus (10) according to claim 1, wherein
the second setting unit (13c), when acquiring second calculated data that is generated from the measurement data by the calculation apparatus (20), sets a third virtual device corresponding to the second calculated data, and when acquiring third calculated data that is generated from the measurement data by the calculation apparatus (20), sets a fourth virtual device corresponding to the third calculated data.

3. The information management apparatus (10) according to claim 1 or 2,
the first setting unit (13b) generates the first virtual device on a cloud system by using a resource included in the cloud system,
the second setting unit (13c) generates the second virtual device on the cloud system by using a resource included in the cloud system.

4. The information management apparatus (10) according to any one of claims 1 to 3, further including:
a transmission unit (13d) that transmits the measurement data that is associated with the first virtual device to the calculation apparatus by using a common API that is shared between the information management apparatus and the calculation apparatus; and
an acquisition unit (13e) that acquires calculated data generated by the calculation apparatus by using the common API.

5. The information management apparatus (10) according to any one of claims 1 to 4, further including:
a display unit (13f) that displays the first virtual device corresponding to the measurement data and a second virtual device corresponding to the first calculated data, and displays data that is associated with a virtual device that is selected from the first virtual device and the second virtual device that are displayed.

6. A calculation apparatus (20) comprising:
a reception unit (23a) that receives, from an information management apparatus (10), measurement data that is associated with a first virtual device set by the information management apparatus (10) and that is collected by a device (30);
a calculation unit (23b) that generates first calculated data by performing a predetermined calculation on the measurement data; and
a transmission unit (23c) that transmits the first calculated data as data that is associated with a second virtual device set by the information management apparatus (10) to the information management apparatus (10).

7. An information management program that causes a computer (10) to execute a process, the process comprising:
receiving measurement data that is collected by a device (30);
setting a first virtual device corresponding to the measurement data; and
setting, when a calculation apparatus (20) that performs a predetermined calculation receives the measurement data and when acquiring first calculated data that is generated from the measurement data, a second virtual device corresponding to the first calculated data.

8. A calculation program that causes a computer (20) to execute a process, the process comprising:
receiving, from an information management apparatus (10), measurement data that is associated with a first virtual device set by the information management apparatus (10) and that is collected by a device (30);
generating first calculated data by performing a predetermined calculation on the measurement data; and
transmitting the first calculated data as data that is associated with a second virtual device set by the information management apparatus (10) to the information management apparatus (10).

9. An information processing system comprising:
an information management apparatus (10); and
a calculation apparatus (20), wherein
the information management apparatus (10) includes
a reception unit (13a) that receives measurement data that is collected by a device (30);
a first setting unit (13b) that sets a first virtual device corresponding to the measurement data; and
a second setting unit (13c) that sets a second virtual device corresponding to first calculated data that is generated from the measurement data by the calculation apparatus, and
the calculation apparatus (20) includes
a reception unit (23a) that receives, from the information management apparatus (10), the measurement data that is associated with the first virtual device;
a calculation unit (23b) that generates the first calculated data by performing a predetermined calculation on the measurement data; and
a transmission unit (23c) that transmits the first calculated data as data that is associated with the second virtual device to the information management apparatus (10).

10. An information processing method implemented by an information management apparatus (10) and a calculation apparatus (20), the information processing method comprising:
receiving, by the information management apparatus (10), measurement data that is collected by a device (30);
setting, by the information management apparatus (10), a first virtual device corresponding to the measurement data;
setting, by the information management apparatus (10), a second virtual device corresponding to first calculated data that is generated from the measurement data by the calculation apparatus (20);
receiving, by the calculation apparatus (20), the measurement data that is associated with the first virtual device from the information management apparatus (10);
generating, by the calculation apparatus (20), the first calculated data by performing a predetermined calculation on the measurement data; and
transmitting, by the calculation apparatus (20), the first calculated data as data that is associated with the second virtual device to the information management apparatus (10).
